# EUROPEAN PATENT APPLICATION

(11) **EP 2 136 430 A1**
(43) Date of publication of application: **23.12.2009**
(21) Application number: 07828903.0
(22) Date of filing: 01.10.2007
(51) Int. Cl.: H01M 10/44, H02J 7/02, H02J 7/10

(54) **POWER SYSTEM AND METHOD FOR CHARGING BATTERY PACK**

(30) Priority: 12.04.2007 JP 2007104778
(71) Applicant: Panasonic Corporation, Kadoma-shi Osaka 571-8501 (JP)
(72) Inventor: Mamoru Aoki c/o Panasonic Corporation, Chuo-ku Osaka-shi ,Osaka 540-6207 (JP); Shigeyuki Sugiyama c/o Panasonic Corporation, Chuo-ku,Osaka-shi ,Osaka 540-6207 (JP); Kohei Suzuki c/o Panasonic Corporation, Chuo-ku ,Osaka-shi,Osaka,540-6207 (JP)
(74) Representative: Schwabe - Sandmair - Marx
(86) International application number: PCT/JP2007/069163
(87) International publication number: WO 2008/129698

(57) **Abstract**

This invention relates to a power system comprising secondary batteries and a method of charging a set battery, and more specifically relates to technology which prevents degradation of a set battery which is a power source, even when using a simple constant-voltage charger. An object of this invention is to provide a power system and a charging method which, when using a constant voltage to charge secondary batteries having a higher energy density per unit weight than lead storage batteries, can reduce concerns of deformation of the secondary batteries due to overcharging, and improve safety. According to this invention, in a power system including a set battery in which a plurality of cells are connected in series, and a constant-voltage charger which applies a constant rated charging voltage V_{C} to charge the set battery, and in a set battery charging method, the total voltage Vx which is the total of the average discharge voltages of the plurality of cells and the rated charging voltage V_{C} are set so as to satisfy the relation 0.98Vx ≤ V_{C} ≤ 1.15Vx.

## Description

### Technical Field

This invention relates to a power system comprising a secondary battery and to a set battery charging method, and more specifically relates to technology to prevent degradation of a set battery, which is a power source, even when using a simple constant-voltage charger.

### Background Art

Alkaline storage batteries such as nickel hydrogen storage batteries and nickel cadmium storage batteries, as well as lithium ion secondary batteries, lithium polymer secondary batteries, and other nonaqueous electrolyte secondary batteries, have higher energy densities per unit weight than lead storage batteries, and so are attracting attention as power sources for use in vehicles, portable equipment, and other mobile equipment. In recent years in particular, efforts have been made to form set battery ( assembled cells, battery pack ) in which the above-described secondary batteries are connected in series, for use as power sources in racecars and other applications.

A power source for vehicles is discharged with a large current as a starter during startup, and during vehicle operation receives current sent from a generator (constant-voltage charger) and is charged. A lead storage battery has a reaction mechanism which is comparatively well-suited to charging and discharging at large currents, but due to their reaction mechanisms, the above-described secondary batteries cannot be said to be suitable for large-current charging and discharging. Specifically, these secondary batteries have the following various drawbacks in the last stage of charging.

In the cases of nickel hydrogen storage batteries, nickel cadmium storage batteries, and other alkaline storage batteries, oxygen gas is generated from the positive electrode in the last stage of charging. Also, when the environmental temperature rises, the voltage at which oxygen gas is generated from the positive electrode (oxygen overvoltage) falls. If n alkaline storage batteries, the oxygen overvoltage of which has fallen to V₁, are charged by a constant-voltage charger (rated charging voltage V₂), and if the condition V₂ > ₙV₁ is satisfied, then oxygen gas continues to be generated without charging coming to an end, and there are concerns that each of the secondary batteries (cells) comprised by the set battery may be deformed due to increased battery internal pressure.

Next, in the case of lithium ion secondary batteries, lithium polymer secondary batteries, and other nonaqueous electrolyte secondary batteries, the electrolyte fluid comprising nonaqueous material readily decomposes in the last stage of charging. Also, this tendency becomes more pronounced as the environmental temperature rises, and there are concerns that the cells comprised by the set battery may be deformed due to increased battery internal pressure.

In order to protect secondary batteries from such deformation due to overcharging, safety circuits are know which monitor the terminal voltage and temperature of a secondary battery, and, when the temperature voltage and temperature exceed prescribed reference values, shut off the charge/discharge path of the secondary battery to protect the secondary battery. However, in the case of a secondary battery used as a power source in a vehicle, shutting off of the charge/discharge path is not permitted, for the following reason.

That is, a secondary battery used as a power source in a vehicle is charged by a generator mounted in the vehicle. The amount of power generated by the generator mounted in the vehicle changes according to the state of travel of the vehicle. Hence a secondary battery of the vehicle serves to absorb excess power by receiving excess power for charging when an excess amount of power generated by the generator, and serves to stabilize the voltage supplied to the load circuitry in the vehicle. Further, when the engine is operated, power for spark plug ignition is also supplied from a secondary battery.

Hence if the charge/discharge path of a secondary battery is shut off in order to prevent overcharging of the secondary battery, when the amount of power generated by the generator becomes an excess amount, the excess power cannot be absorbed, the voltage rises and is supplied to load circuitry in the vehicle, and there are concerns that the load circuitry may be damaged or that the engine may stop. For these reasons, in the case of a secondary battery used as a vehicle power source, shutting off of the charge/discharge path is not permitted.

In order to resolve such problems, it is thought to be effective to pass further current to a separate circuit (side-path circuit) when charging of the set battery used as a power source is completed, as described in Patent Document 1.

When applying the technology of Patent Document 1 as automotive technology, the side circuit can be implemented in the following two modes. A first mode is a mode in which a side-path circuit is formed in which current is provided to other onboard electric-powered equipment (headlights, car stereo, car air conditioner, or similar). A second mode is a mode in which a side-path circuit is formed to simply provide current to a resistor which dissipates current.

However, in the technology disclosed in Patent Document 1, if the first mode is adopted, there are concerns that when the constant-voltage charger supplies excessive current to electric-powered equipment, the electric-powered equipment may be caused to malfunction. And, if the second mode is adopted, the heat generated when current is dissipated by the resistor causes an increase in the environmental temperature of the secondary battery, so that there is increased concern of deformation of cells.
Patent Document 1: Japanese Patent Application Laid-open No. 07-059266

### Disclosure of the Invention

An object of this invention is to provide a power system and a charging method, for cases in which a secondary battery having higher energy density per unit weight than a lead storage battery is charged at constant voltage, which can reduce concerns of deformation of the secondary battery due to overcharging and can improve security.

A power system of this invention comprises a set battery, in which a plurality of cells are connected in series, and a constant-voltage charger which applies a constant rated charging voltage V_{C} to charge the set battery, the total voltage Vx which is the total of the average discharge voltages of the plurality of cells, and the rated charging voltage V_{C} being set so as to satisfy the relation 0.98 Vx ≤ V_{C} ≤ 1.15 Vx.

Further, in a set battery charging method of this invention, a set battery in which a plurality of cells are connected in series and which has a total voltage Vx that is the total of the average discharge voltages of the plurality of cells, is charged at a constant rated charging voltage V_{C} satisfying the relation 0.98 Vx ≤ V_{C} ≤ 1.15 Vx.

By means of this configuration, when using a constant voltage to charge a secondary battery having a higher energy density per unit weight than a lead storage battery, a power system and charging method can be provided which reduce concerns of deformation of the secondary battery due to overcharging and which improve security.

Further, by constructing a power system satisfying the above-described relation, or by charging a set battery, a secondary battery which, while having a high energy density per unit weight, has problems in the last stage of charging, can be combined and utilized with a simple constant-voltage charger without difficulty.

### Brief Description of the Drawings

[Fig. 1] Fig. 1 shows the behavior of the terminal voltage during charging and discharging of a nickel hydrogen storage battery at normal temperature;
[Fig. 2] Fig. 2 shows the behavior of the terminal voltage during charging and discharging of a lithium ion secondary battery at normal temperature; and
[Fig. 3] Fig. 3 is a block diagram showing an example of the power system of one embodiment of the invention.

### Best Mode for Carrying Out the Invention

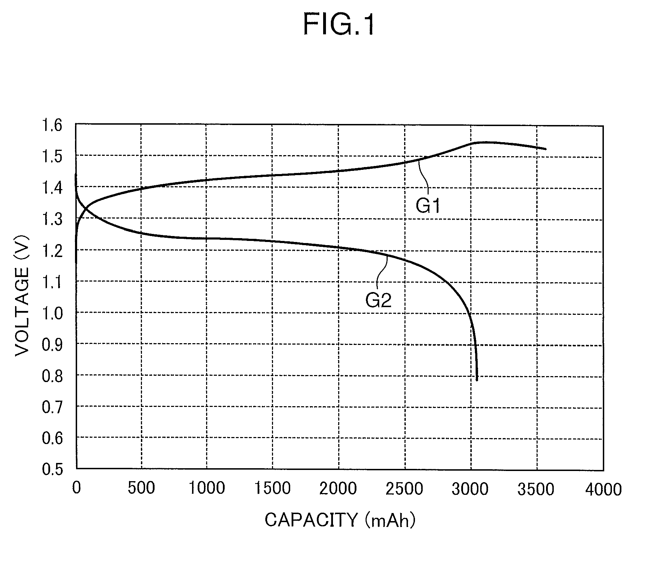

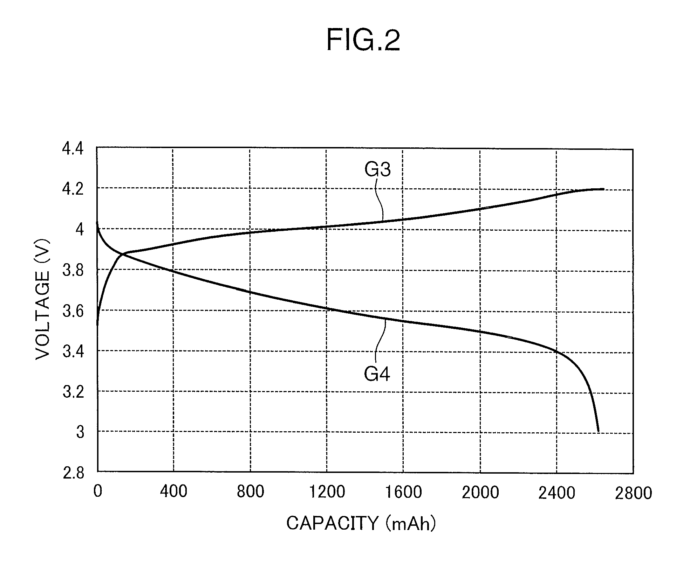

Below, preferred embodiments for implementation of the invention are explained using the drawings. Fig. 1 shows the behavior of the terminal voltage during charging and discharging of a nickel hydrogen storage battery at normal temperature (20°C to 25°C), which uses nickel hydroxide as the positive electrode active material and a hydrogen-absorbing alloy as the negative electrode active material. Fig. 2 shows the behavior of the terminal voltage during charging and discharging of a lithium ion secondary battery, which uses lithium cobalt oxide as the positive electrode active material and graphite as the negative electrode active material.

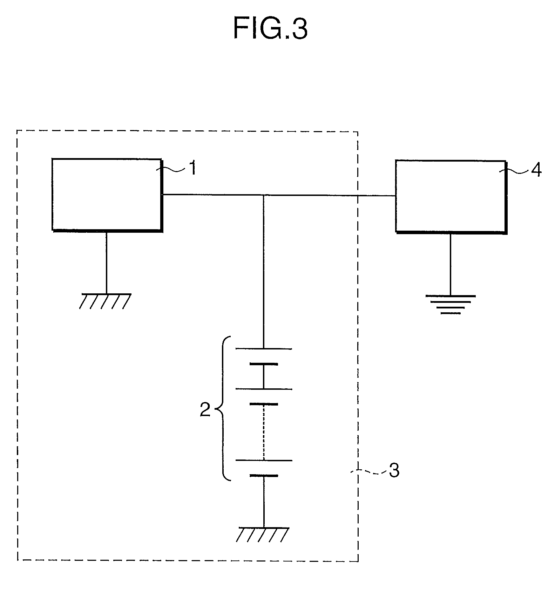

Fig. 3 is a block diagram showing an example of the power system of one embodiment of the invention. The power system 3 shown in Fig. 3 is for example an automotive power system. The power system 3 comprises a set battery 2 connected to a constant-voltage charger 1. The output voltage of the constant-voltage charger 1 and set battery 2 is supplied to onboard equipment 4 connected to the power system 3.

The constant-voltage charger 1 is for example a generator mounted in the vehicle. The constant-voltage charger 1 stabilizes a generated voltage, which is supplied, as a rated charging voltage V_{C} set in advance, to the set battery 2 and to the onboard equipment 4.

The set battery 2 comprises a plurality of cells connected in series. Each cell may itself be a plurality of cells connected in parallel. When there is an excess of the power generated by the constant-voltage charger 1, the rated charging voltage V_{C} output from the constant-voltage charger 1 is applied to the terminals of the set battery 2, and the set battery 2 is charged at a constant voltage. When the power generated by the constant-voltage charger 1 is insufficient, power is supplied from the set battery 2 to the onboard equipment 4.

The onboard equipment 4 may for example be a starter which starts the vehicle engine, lights, car navigation equipment, or other load devices.

Below, the power systems of first through 20th embodiments, described below, are configured by setting as appropriate, in the power system 3 shown in Fig. 3, the types and numbers of cells comprised by the set battery 2, and the rated charging voltage V_{C} of the constant-voltage charger 1.

The power system of a first embodiment of the invention is a power system comprising a set battery 2 and a constant-voltage charger 1 which charges the set battery 2; the set battery 2 comprises n_{A} cells A series-connected and with an average discharge voltage V_{A}, and the rated charging voltage V_{C} of the constant-voltage charger 1 is in the range 0.98 n_{A}V_{A} ≤ V_{C} ≤ 1.15 n_{A}V_{A}.

In this case, n_{A}V_{A} is equivalent to an example of the total voltage Vx.

In Fig. 1, the graph G1 shows the behavior during charging, and the graph G2 shows the behavior during discharge. The charging current in graph G1 and the discharge current in graph G2 are both 1 It.

A nickel hydrogen storage battery exhibits a comparatively flat charge/discharge voltage from the low state of charge (SOC) region of 20% to the high region of 80%. Upon reaching the last stage of charging, in which the SOC exceeds 90%, the charging voltage rises abruptly, but in the vicinity of 100% the charge voltage declines rather than rising. This phenomenon is accompanied by a phenomenon in which oxygen gas is generated from the positive electrode during overcharging, and is called oxygen overvoltage. As stated above, oxygen overvoltage tends to fall as the environmental temperature rises.

That is, after the abrupt rise in the charging voltage occurs, the charging voltage begins to decline because oxygen gas is already being generated. In order to avoid deformation of the cell resulting from an increase in internal pressure due to the incessant generation of oxygen gas, charging by the constant-voltage charger 1 must be halted within the SOC range in which at flat charging voltage is exhibited at normal temperature.

In Fig. 2, the graph G3 shows the behavior of the terminal voltage during charging, and the graph G4 shows the behavior of the terminal voltage during discharge. The charging current in graph G3 and the discharge current in graph G4 are both 1 It.

A lithium ion secondary battery exhibits a comparatively gentle rise in the charge/discharge voltage as the SOC increases, from the low SOC region of 10% to the high region of 80%. Upon reaching the last stage of charging, in which the SOC exceeds 90%, the charging voltage rises abruptly, and components (mainly carbonates) of the electrolyte fluid comprising the nonaqueous electrolyte become easily decomposed. As stated above, as the environmental temperature rises there is a tendency for the electrolyte fluid components to decompose readily.

Hence in order to avoid deformation of the cell resulting from an increase in internal pressure due to generation of gas resulting from electrolyte fluid decomposition, charging by the constant-voltage charger must be halted within the SOC range in which at flat charging voltage is exhibited at normal temperature, before the abrupt rise in the charging voltage.

A power system of the first embodiment of the invention comprises a set battery 2, in which n_{A} secondary cells A having an average discharge voltage V_{A} are connected in series, and a constant-voltage charger 1 which applies a constant rated charging voltage V_{C} to the set battery 2 and performs constant-voltage charging. The number n_{A} of cells A and the rated charging voltage V_{C} are set so as to satisfy the relation 0.98 n_{A}V_{A} ≤ V_{C} ≤ 1.15 5 n_{A}V_{A}.

By means of this configuration, in the power system of the first embodiment, by balancing the terminal voltage of the set battery 2 and the rated charge voltage V_{C} without shutting off the charge/discharge path outside the set battery 2 using for example a safety circuit, charging is made to stop automatically.

Hence as the constant-voltage charger 1, even when the set battery 2 is charged at constant voltage using a simple constant-voltage charger such as a generator or constant-voltage power source not having an overcharge prevention function, concerns of secondary battery deformation due to overcharging are reduced, and safety can be improved. Further, in the power system of the first embodiment, concerns of secondary battery deformation due to overcharging can be reduced without shutting off the charge/discharge path of the set battery 2, making such a power system suitable for use in vehicles.

As one example, in a power system comprising a set battery 2 in which are connected ten nickel hydrogen storage batteries (average discharge voltage V_{A} = 1.23 V) shown in Fig. 1, the rated charging voltage V_{C} of the constant-voltage charger 1 is set in the range 12.1 V to 14.1 V. It was discovered experimentally that using this configuration, if a constant-voltage charger is used having a rated charging voltage V_{C} of less than 12.1 V (equivalent to 0.98 n_{A}V_{A}), the charging voltage per battery is less than 1.21 V, and there are concerns that the set battery 2 can hardly be charged at all.

On the other hand, it was discovered experimentally that, if in this configuration a constant-voltage charger 1 having a rated charging voltage V_{C} exceeding 14.1 V (equivalent to 1.15 n_{A}V_{A}) is used, with the cells comprised by the set battery 2 at high temperatures, there are concerns that the rising battery internal pressure may give rise to deformation and fluid leakage.

As a similar example, in a power system 3 comprising a set battery 2 in which three of the lithium ion secondary batteries shown in Fig. 2 (average discharge voltage V_{A} = 3.58 V) are connected in series, the rated charging voltage V_{C} of the constant-voltage charger is set in the range 10.5 V to 12.4 V. It was discovered experimentally that using this configuration, if a constant-voltage charger is used having a rated charging voltage V_{C} of less than 10.5 V (equivalent to 0.98 n_{A}V_{A})_{,} the charging voltage per battery is less than 3.5 V, and there are concerns that the set battery can hardly be charged at all.

On the other hand, it was discovered experimentally that, if in this configuration a constant-voltage charger having a rated charging voltage V_{C} exceeding 12.4 V (equivalent to 1.15 n_{A}V_{A}) is used, with the cells comprised by the set battery at high temperatures, there are concerns that the rising battery internal pressure may give rise to deformation and fluid leakage.

As is seen from Fig. 1 and Fig. 2, the discharge voltage of nickel hydrogen storage batteries, lithium ion secondary batteries, and other cells is closely correlated with the charging voltage, and moreover, if in the SOC region from 20% to 80%, there is almost no change in the average discharge voltage even when the charging end voltage changes by approximately 5%. Thus the characteristics of each of these types of batteries are well reflected in the average discharge voltage, so that the average discharge voltage can be used appropriately as a reference value for setting the rated charging voltage V_{C} to reduce concerns of deformation of secondary batteries due to overcharging.

The following is an example of a method of determining the average discharge voltage of a cell. When using an alkaline storage battery as the cell, constant-current charging of the cell is performed at a current value of 1 ItA (here 1 ItA is the current value obtained by dividing the cell's theoretical capacity by one hour) until a SOC of 120% is reached, and thereafter constant-current discharging is performed at 1 ItA is performed until 1 V is reached to determine the discharge capacity; the discharge voltage when at 50% of this discharge capacity can be stipulated as the average discharge voltage.

When using nonaqueous electrolyte secondary batteries as cells, constant-current charging of the cells at a current value of 1 ItA up to 4.2 V can be performed, and thereafter constant-current discharging performed at 1 ItA to 3 V to determine the discharge capacity, and the discharge voltage at 50% of this discharge capacity can be stipulated as the average discharge voltage.

The power system of a second embodiment of the invention is that of the first embodiment, but using the nominal voltage of the cells A in place of the average discharge voltage V_{A}. The nominal voltages of batteries as announced by battery manufacturers are substantially equal to the average discharge voltages V_{A}, so that even when the nominal voltage is used in place of the average discharge voltage V_{A}, substantially the same advantageous results are obtained.

The power system of a third embodiment of the invention is the power system of the first embodiment of the invention, using as the cells A nickel hydrogen storage batteries and/or nickel cadmium storage batteries. The energy density per unit weight of the above-described alkaline batteries is higher than that of lead storage batteries, and moreover there is the advantage that the voltage is flat over a broad SOC region, and rapid charge/discharge characteristics are superior to those of nonaqueous electrolyte secondary batteries.

The power system of a fourth embodiment of the invention is the power system of the first embodiment of the invention, using as the cells A comprised by the set battery 2 nonaqueous electrolyte secondary batteries. Nonaqueous electrolyte secondary batteries have a higher energy density per unit weight than alkaline storage batteries as well as lead storage batteries, and have the advantage of a broad SOC region over which the voltage is flat.

The power system of a fifth embodiment of the invention is the power system of the fourth embodiment of the invention, using a lithium complex oxide comprising cobalt in the active material of the positive electrodes of the nonaqueous electrolyte secondary batteries. Nonaqueous electrolyte secondary batteries, in which lithium cobalt oxide or another cobalt-containing lithium complex oxide is used in the active material of the positive electrodes, have the advantages that the SOC region over which the voltage is flat is extremely broad, and that the discharge voltage is high.

The power system of a sixth embodiment of the invention is a power system comprising a set battery 2 and a constant-voltage charger 1 which charges the set battery 2. The set battery 2 comprises n_{A} cells A with an average discharge voltage V_{A}, and n_{B} cells B with an average discharge voltage V_{B}, connected in series. Also, the rated charging voltage V_{C} of the constant-voltage charger 1 is set in the range 0.98 (n_{A}V_{A}+n_{B}V_{B}) ≤ V_{C} < 1.15 (n_{A}V_{A}+n_{B}V_{B}).

In this case, (n_{A}V_{A}+n_{B}V_{B}) is equivalent to an example of the total voltage Vx.

By means of a power system configured in this way, advantageous results similar to those of the first embodiment are obtained. Further, as in the above-described first embodiment, by using battery systems with different average discharge voltages rather than configuring the set battery 2 using a single battery system, there is an expanded range of freedom in selecting the voltage range for the rated charging voltage V_{C} resulting from the combination, so that even when for example the rated charging voltage of the constant-voltage charger 1 is determined in advance, a set battery 2 can be configured having various output voltages, made to conform to the rated charging voltage of the constant-voltage charger 1.

An example of the power system of the sixth embodiment is a power system comprising a set battery 2, in which three of the nickel hydrogen storage batteries shown in Fig. 1 (average discharge voltage V_{A} = 1.23 V) and two of the lithium ion secondary batteries shown in Fig. 2 (average discharge voltage V_{B} = 3.58 V) are connected in series.

In a power system configured in this way, the rated charging voltage V_{C} of the constant-voltage charger 1 is set in the range 10.6 V to 12.5 V. It was experimentally discovered that for this configuration, when a constant-voltage charger 1 with a rated charging voltage V_{C} of less than 10.6 V (equivalent to 0.98 (n_{A}V_{A}+n_{B}V_{B})) is used, there are concerns that the set battery 2 can hardly be charged at all.

On the other hand, it was discovered experimentally that, if in this configuration a constant-voltage charger 1 having a rated charging voltage V_{C} exceeding 12.5 V (equivalent to 1.15 (n_{A}V_{A}+n_{B}V_{B})) is used, with the cells comprised by the set battery 2 at high temperatures, there are concerns that the rising battery internal pressure may give rise to deformation and fluid leakage.

The power system of a seventh embodiment of the invention is the power system of the sixth embodiment of the invention, using the nominal voltages of the cells A, B instead of the average discharge voltages V_{A}, V_{B}. The nominal voltages of batteries as announced by battery manufacturers are substantially equal to the average discharge voltages V_{A}, V_{B}, so that even when the nominal voltages of the cells A, B are used in place of the average discharge voltages V_{A}, V_{B}, substantially the same advantageous results as in the sixth embodiment are obtained.

The power system of an eighth embodiment of the invention is the power system of the sixth embodiment of the invention, using as the cells A nickel hydrogen storage batteries and/or nickel cadmium storage batteries. The advantageous results of the eighth embodiment are similar to those of the third embodiment.

The power system of a ninth embodiment of the invention is the power system of the sixth embodiment, in which nonaqueous electrolyte secondary batteries are used as the cells B. The advantageous results of the ninth embodiment are similar to those of the fourth embodiment.

The power system of a tenth embodiment of the invention is the power system of the ninth embodiment, in which a lithium complex oxide comprising cobalt is used in the active material of the positive electrodes of the nonaqueous electrolyte secondary batteries. The advantageous results of the tenth embodiment are similar to those of the fifth embodiment.

Thus by means of the power systems 3 shown in Fig. 3 of the first through tenth embodiments, even when comparatively high generated power is output from the constant-voltage charger 1, the set battery 2 can charge a portion thereof, so that all of the power output from the constant-voltage charger 1 can be absorbed by the onboard equipment 4 and the set battery 2. Hence the application of an excessive voltage to onboard equipment 4 when excess power occurs is prevented, and malfunctioning of onboard equipment 4 is averted. Here the rated charging voltage V_{C} of the constant-voltage charger 1 may be the value displayed if the charger is a commercially marketed charger, and need not be the maximum rated voltage taking load variation into account.

The method of charging a set battery of an eleventh embodiment of the invention entails charging a set battery, in which n_{A} cells A with an average discharge voltage V_{A} are connected in series, is charged at a rated charging voltage V_{C} so as to satisfy the relation 0.98 n_{A}V_{A} ≤ V_{C} 1.15 n_{A}V_{A}. The configuration and advantageous results of the eleventh embodiment are similar to those of the first embodiment.

The method of charging a set battery of a twelfth embodiment of the invention is that of the eleventh embodiment, in which the nominal voltage of the cells A is used instead of the average discharge voltage V_{A}. The advantageous results of the twelfth embodiment are similar to those of the second embodiment.

The method of charging a set battery of a 13th embodiment of the invention is that of the eleventh embodiment, in which nickel hydrogen storage batteries and/or nickel cadmium storage batteries are used as the cells A. The advantageous results of the 13th embodiment are similar to those of the third embodiment.

The method of charging a set battery of a 14th embodiment of the invention is that of the eleventh embodiment, in which nonaqueous electrolyte secondary batteries are used as the cells A. The advantageous results of the 14th embodiment are similar to those of the fourth embodiment.

The method of charging a set battery of a 15th embodiment of the invention is that of the 14th embodiment, in which a lithium complex oxide comprising cobalt is used in the active material of the positive electrodes of the nonaqueous electrolyte secondary batteries. The advantageous results of the 15th embodiment are similar to those of the fifth embodiment.

The method of charging a set battery of a 16th embodiment of the invention is a charging method of charging a set battery, comprising n_{A} cells A with average discharge voltage V_{A} and n_{B} cells B with average discharge voltage V_{B} connected in series, at a rated charging voltage V_{C} which satisfies the relation 0.98 (n_{A}V_{A}+n_{B}V_{B}) ≤ V_{C} < 1.15 (n_{A}V_{A}+n_{B}V_{B}). The advantageous results of the 16th embodiment are similar to those of the sixth embodiment.

The method of charging a set battery of a 17th embodiment of the invention is that of the 16th embodiment, in which the nominal voltages for the cells A, B are used instead of the average discharge voltages V_{A}, V_{B}. The advantageous results of the 17th embodiment are similar to those of the second embodiment.

The method of charging a set battery of an 18th embodiment of the invention is that of the 16th embodiment, in which nickel hydrogen storage batteries and/or nickel cadmium storage batteries are used as the cells A. The advantageous results of the 18th embodiment are similar to those of the third embodiment.

The method of charging a set battery of a 19th embodiment of the invention is that of the 16th embodiment, in which nonaqueous electrolyte secondary batteries are used as the cells B. The advantageous results of the 19th embodiment are similar to those of the fourth embodiment.

The method of charging a set battery of a 20th embodiment of the invention is that of the 19th embodiment, in which a lithium complex oxide comprising cobalt is used in the active material of the positive electrodes of the nonaqueous electrolyte secondary batteries. The advantageous results of the 20th embodiment are similar to those of the fifth embodiment.

Below, practical examples of the invention are explained in detail.

### Practical Example 1

### (Practical Example 1-1)

A paste comprising a mixture of a nickel-containing tertiary porous material, nickel hydroxide, cobalt hydroxide, and zinc oxide was packed, dried, and rolled using a rolling press, to fabricate positive electrodes. On the other hand, a paste comprising a mixture of a hydrogen-absorbing alloy (composition MmNi_{3.55}Co_{0.75}Al_{0.3}Mn_{0.4} (where Mm is a mixture of rare earth elements)) and a binder was applied and dried on metal for punching in which holes were opened in a nickel-plated steel sheet, and rolling with a rolling press was further performed to fabricate negative electrodes.

A positive and negative electrode were wound in a spiral shape, with a separator comprising polypropylene unwoven cloth subjected to sulfonation treatment interposed, and were housed in a metal case with a floor (inner diameter 23.5 mm, height 43 mm). As the electrolyte fluid, an alkaline aqueous solution the main component of which was potassium hydroxide, with a specific gravity of 1.3, was injected, and by sealing the open end face of the case with a sealing plate comprising a safety valve with a valve action pressure of 2 MPa, a nickel hydrogen storage battery (theoretical capacity 3 Ah) was fabricated.

This nickel hydrogen storage battery was charged for 15 hours at a current value of 0.1 ItA, and then discharged at a current value of 0.5 ItA until the battery voltage reached 1 V. This charge/discharge cycle was repeated three times to perform activation. This nickel hydrogen storage battery was charged at constant current, at a current value of 1 ItA, until SOC 120% was reached, and then constant-current discharge was performed at 1 ItA until 1 V was reached to determine the discharge capacity; the discharge voltage (average discharge voltage, 1.23 V) when at 50% of the discharge capacity was taken to be the average discharge voltage V_{A}.

Then such nickel hydrogen storage batteries were used as cells A and connected in series to form a set battery (n_{A}V_{A} = 12.3 V), and a power system was constructed in which this set battery was connected to a charge/discharge device comprising a constant-voltage charger with a rated charging voltage V_{C} of 12.1 V (V_{C} =0.98 n_{A}V_{A}). This was the system of Practical Example 1-1.

### (Practical Examples 1-2 and 1-3)

With respect to Practical Example 1-1, other than using constant-voltage chargers with rated charging voltages V_{C} of 12.9 V (Practical Example 1-2: V_{C} = 1.05 n_{A}V_{A}) and 14.1 V (Practical Example 1-3: V_{C} = 1.15 n_{A}V_{A})_{,} power systems similar to those of Practical Example 1-1 were constructed.

### (Comparative Examples 1-1, 1-2)

With respect to Practical Example 1-1, other than using constant-voltage chargers with rated charging voltages V_{C} of 11.7 V (Comparative Example 1-1: V_{C} = 0.95 n_{A}V_{A}) and 14.8 V (Comparative Example 1-2: V_{C} = 1.2 n_{A}V_{A}), power systems similar to those of Practical Example 1-1 were constructed.

The following tests were performed on the above power systems. Results appear in Table 1. The following tests were similarly performed for Practical Examples 2 and 3 below, and results appear in Table 2 and Table 3.

### (Normal-Temperature Charging Characteristics)

After allowing a charging current to flow from each of the constant-voltage chargers for one hour, discharge was performed at a current value of 1 ItA until 1 V was reached. The discharge capacity at this time was taken to be an index of the normal-temperature charging characteristic (Table 1).

### (High-Temperature Charging Characteristics)

A charging current was passed through each of the power systems for two hours in a 45°C atmosphere. Then, any abnormalities in the cells in the set battery were visually confirmed, and the state thereof was taken as an index of the high-temperature charging characteristic (Table 1).

### (Charge/Discharge Repetition)

In the configuration of a power system 3 shown in Fig. 3, a dummy load was connected instead of the onboard equipment 4, and 36 A of current was supplied to the dummy load from the constant-voltage charger 1 (generator) and from the set battery 2. And, all of the cells were completely discharged (in cases where the cells were lithium ion secondary batteries, the cells were discharged at 1 It until the cell terminal voltage reached 3 V; in cases where the cells were nickel hydrogen secondary batteries, the cells were discharged at 1 It until the cell terminal voltage reached 1 V).

Using the cells which had been completely discharged in this way, a set battery 2 was fabricated, and the set battery 2 was charged at the rated charging voltage V_{C} of the constant-voltage charger 1. An ammeter was connected in series with the dummy load, and the current flowing through the dummy load was measured.

By opening and closing a switch, not shown, the current supply from the constant-voltage charger 1 to the set battery 2 was stopped and started repeatedly 20 times at 0.01 second intervals (the switch, not shown, was turned on for 0.01 second then turned off for 0.01 second, and such turn-on/turn-off operation was repeated 20 times).

And, the number of times the current value measured by the ammeter described above changed considerably (fell to one-half or less) when the switch was turned off was counted as the "number of fluctuations of the ammeter needle".

In this case, if "the number of fluctuations of the ammeter needle" is zero, this indicates that then even if the supply of current from the constant-voltage charger 1 is halted, power can be stably supplied to the dummy load equivalent to the onboard equipment 4 through discharge of the set battery 2.

**[Table 1]**

| | Comparative Example 1-1 | Practical Example 1-1 | Practical Example 1-2 | Practical Example 1-3 | Comparative Example 1-2 |
|---|---|---|---|---|---|
| Vc (V) | 11.7 | 12.1 | 12.9 | 14.1 | 14.8 |
| Normal-temperature charge/discharge capacity (mAh) | 0 | 2 | 33 | 817 | 2600 |
| Number of fluctuations of ammeter needle | 20 | 0 | 0 | 0 | 0 |
| High-temperature charging/electrolyte fluid leakage | no | no | no | no | yes |

In Comparative Example 1-1, in which the relation between the rated voltage of the set battery (n_{A}V_{A}) and the constant-voltage charger rated charging voltage V_{C} is V_{C} < 0.98 n_{A}V_{A}, charging was not performed at all at normal temperature. The reason for this may have been that the rated charging voltage V_{C} of the constant-voltage charger was lower than the charging initiation voltage of the set battery. When such a power system is used as the power system 3 for a vehicle as shown in Fig. 3, excess power generated by the constant-voltage charger 1 is not absorbed by the set battery 2, so that all the power generated is supplied to the onboard equipment 4, and there are concerns of malfunction of the onboard equipment 4.

However, in a power system 3 used as a power source in an automobile, when for example brakes are applied and the vehicle rapidly decelerates or at other times, the output power from the constant-voltage charger 1 generating power through driving by the engine may drop in a pulse-like manner. At this time, the quantity of electricity charging the set battery 2 is insufficient, so that current cannot be supplied from the set battery 2 to the onboard equipment 4, and so there are concerns that the spark plugs, engine control circuitry, and other onboard equipment 4 may halt operation, and the automobile may stop.

When such a pulse-like drop in the output power of the constant-voltage charger 1 occurs, the current which must be supplied by the set battery 2 to the onboard equipment 4 in order that the automobile does not stop is approximately 5 A to 40 A. However, such a pulse-like output power drop occurs over a short time of approximately 0.01 seconds per occurrence, so that the discharge electrical quantity which must be supplied to the onboard equipment 4 by the set battery 2 is approximately 0.01 mAh to 0.1 mAh per occurrence.

Hence if charged with an electrical quantity of 0.1 mAh or more, the set battery 2 can supply sufficient power to the onboard equipment 4 even when the above-described pulse-like drop in the output power of the constant-voltage charger 1 occurs.

In Comparative Example 1-1 the "number of fluctuations of the ammeter needle" is 20, as indicated in Table 1, and when the supply of current from the constant-voltage charger 1 stops, current could not be supplied from the set battery 2 to the onboard equipment 4. Hence Comparative Example 1-1, in which V_{C} < 0.98 n_{A}V_{A}, is not suitable as a power system for use as an automotive power source.

On the other hand, in Practical Example 1-1, in which the rated charging voltage V_{C} = 0.98 n_{A}V_{A}, during normal-temperature charging characteristic tests the discharge capacity was 2 mAh. That is, the set battery 2 in Practical Example 1-1 was charged with an electrical quantity of 0.1 mAh or greater, so that when the above-described pulse-like drop in the output power of the constant-voltage charger 1 occurs, sufficient power can be supplied to the onboard equipment 4.

In this case, if the discharge capacity is 2 mAh, then when a pulse-like output power drop occurs, an electrical capacity which is 20 times 0.1 mAh is charged, approximately 20 pulse discharges are possible. In an automobile, for practical purposes the set battery 2 is charged immediately after such pulse discharges, so that if 20 continuous 0.1 mAh pulse discharges are possible, then sufficient power can be supplied to the onboard equipment 4 when the above-described pulse-like drop in output power of the constant-voltage charger 1 occurs, even in for example the most demanding racing applications.

In Practical Example 1-1, the "number of fluctuations of the ammeter needle" in repeated charge/discharge tests was zero. That is, it was confirmed that the set battery 2 in Practical Example 1-1 can stably supply power to a dummy load, equivalent to the onboard equipment 4, through discharge of the set battery 2 even when there are 20 pulse-like halts in the supply of current from the constant-voltage charger 1.

In Comparative Example 1-2, in which the above relation is V_{C} > 1.15 n_{A}V_{A}, a safety valve provided to avoid cell deformation operated fully, electrolyte fluid leakage occurred, and high-temperature charging characteristics were at a low level. The reason for this may have been that the rated charging voltage V_{C} of the constant-voltage charger was excessively high, so that the set battery was charged to excess, a large quantity of oxygen gas was generated, and the internal pressure of the cells was increased.

In contrast with this Comparative Example, in the Practical Examples 1-1, 1-2, 1-3 of this invention charging at normal temperature was possible, and moreover high-temperature charging characteristics were satisfactory.

In Practical Example 1, an example was described in which nickel hydrogen storage batteries were used as alkaline storage batteries; but similar results were obtained even when nickel cadmium storage batteries, employing negative electrodes using cadmium as an active material, were used.

### Practical Example 2

### (Practical Example 2-1)

A paste comprising a mixture of lithium cobalt oxide, acetylene black, and polyvinylidene fluoride was applied onto aluminum foil and dried, and was rolled with a rolling press to fabricate a positive electrode. On the other hand, a paste comprising a mixture of artificial graphite, styrene-butadiene copolymer, and a carboxymethyl cellulose derivative was applied to copper foil and dried, and was rolled with a rolling press to fabricate a negative electrode. These positive and negative electrodes were wound in a spiral shape, with a separator comprising a polypropylene fine porous membrane interposed, and were housed in a metal case with a floor (inner diameter 26 mm, height 65 mm).

As the electrolyte fluid, an electrolyte fluid comprising a solvent mixture of ethylene carbonate and ethyl methyl carbonate, into which LiPF₆ was dissolved, was injected, and by sealing the open end face of the case with a sealing plate comprising a safety valve with a valve action pressure of 2 MPa, a lithium ion secondary battery (theoretical capacity 2.6 Ah) was fabricated.

This lithium ion secondary battery was charged at a current value of 1 ItA to 4.05 V, and then discharged at a current value of 0.5 ItA until the battery voltage reached 3 V. This charge/discharge cycle was repeated three times to perform activation. This lithium ion secondary battery was charged at constant current, at a current value of 1 ItA, until 4.2 V was reached, and then constant-current discharge was performed at 1 ItA until 3 V was reached to determine the discharge capacity; the discharge voltage (average discharge voltage, 3.58 V) when at 50% of the discharge capacity was taken to be the average discharge voltage V_{A}.

Three such lithium ion secondary batteries were used as cells B and connected in series to form a set battery (n_{B}V_{B} = 10.74 V), and a power system was constructed in which this set battery B was connected to a charge/discharge device comprising a constant-voltage charger with a rated charging voltage V_{C} of 10.5 V (V_{C} = 0.98 n_{B}V_{B}). This was the system of Practical Example 2-1.

### (Practical Examples 2-2, 2-3)

With respect to Practical Example 2-1, other than the fact that constant-voltage chargers with a rated charging voltage V_{C} of 11.3 V (Practical Example 2-2: V_{C} = 1.05 n_{B}V_{B}) or of 12.4 V (Practical Example 2-3: V_{C} = 1.15 n_{B}V_{B}) were used, power systems similar to those of Practical Example 2-1 were constructed.

### (Comparative Examples 2-1, 2-2)

With respect to Practical Example 2-1, other than the fact that constant-voltage chargers with a rated charging voltage V_{C} of 10.2 V (Comparative Example 2-1: V_{C} = 0.95 n_{B}V_{B}) or of 12.9 V (Comparative Example 2-2: V_{C} = 1.2 n_{B}V_{B}) were used, power systems similar to those of Practical Example 2-1 were constructed.

The normal-temperature charging characteristics and high-temperature charging characteristics of the above power systems were evaluated, similarly to those of Practical Example 1. Results appear in Table 2.

**[Table 2]**

| | Comparative Example 2-1 | Practical Example 2-1 | Practical Example 2-2 | Practical Example 2-3 | Comparative Example 2-2 |
|---|---|---|---|---|---|
| Vc (V) | 10.2 | 10.5 | 11.3 | 12.4 | 12.9 |
| Normal-temperature charge/discharge capacity (mAh) | 0 | 3 | 57 | 2199 | 2635 |
| Number of fluctuations of ammeter needle | 20 | 0 | 0 | 0 | 0 |
| High-temperature charging/electrolyte fluid leakage | no | no | no | no | yes |

In Comparative Example 2-1, in which the relation between the rated voltage of the set battery (n_{A}V_{A}) and the constant-voltage charger rated charging voltage V_{C} is V_{C} < 0.98 n_{A}V_{A}, charging was not performed at all at normal temperature. The reason for this may have been that the rated charging voltage V_{C} of the constant-voltage charger was lower than the charging initiation voltage of the set battery. When such a power system is used as the power system 3 for a vehicle as shown in Fig. 3, excess power generated by the constant-voltage charger 1 is not absorbed by the set battery 2, so that all the power generated is supplied to the onboard equipment 4, and there are concerns of malfunction of the onboard equipment 4.

In Comparative Example 2-1 the "number of fluctuations of the ammeter needle" is 20, as indicated in Table 2, and when the supply of current from the constant-voltage charger 1 stops, current could not be supplied from the set battery 2 to the onboard equipment 4. Hence Comparative Example 2-1, in which V_{C} < 0.98 n_{A}V_{A}, is not suitable as a power system for use as an automotive power source.

On the other hand, in Practical Example 2-1, in which the rated charging voltage V_{C} 0.98 n_{A}V_{A}, during normal-temperature charging characteristic tests the discharge capacity was 3 mAh. That is, the set battery 2 in Practical Example 2-1 was charged with an electrical quantity of 0.1 mAh or greater, so that when the above-described pulse-like drop in the output power of the constant-voltage charger 1 occurs, sufficient power can be supplied to the onboard equipment 4.

In this case, if the discharge capacity is 3 mAh, then when a pulse-like output power drop occurs, because an electrical capacity which is 30 times 0.1 mAh that is required to be discharged is charged, approximately 30 pulse discharges are possible. As a result, similarly to the case of Practical Example 1-1, the set battery 2 in Practical Example 2-1 enables sufficient power to be supplied to the onboard equipment 4 when the above-described pulse-like drop in output power of the constant-voltage charger 1 occurs, even in for example the most demanding racing applications.

In Practical Example 2-1, the "number of fluctuations of the ammeter needle" in repeated charge/discharge tests was zero. That is, it was confirmed that the set battery 2 in Practical Example 2-1 can stably supply power to a dummy load, equivalent to the onboard equipment 4, through discharge of the set battery 2 even when there are 20 pulse-like halts in the supply of current from the constant-voltage charger 1.

In Comparative Example 2-2, in which the above relation is V_{C} > 1.15 n_{A}V_{A}, a safety valve provided to avoid cell deformation operated fully, electrolyte fluid leakage occurred, and high-temperature charging characteristics were at a low level. The reason for this may have been that the rated charging voltage V_{C} of the constant-voltage charger was excessively high, so that the set battery was charged to excess, a large quantity of oxygen gas was generated, and the internal pressure of the cells was increased.

In contrast with this Comparative Example, in the Practical Examples 2-1, 2-2, 2-3 of this invention charging at normal temperature was possible, and moreover high-temperature charging characteristics were satisfactory.

In Practical Example 2, an example was described in which lithium ion secondary batteries were used as nonaqueous electrolyte secondary batteries; but similar results were obtained even when lithium polymer secondary batteries, employing electrolyte fluid formed into a gel, were used.

### Practical Example 3

### (Practical Example 3-1)

Three of the same cells A as in Practical Example 1-1 (n_{A}V_{A} = 3.69 V) and two of the same cells B as in Practical Example 2-1 (n_{B}V_{B} = 7.16 V) were connected in series to form a set battery (n_{A}V_{A}+n_{B}V_{B} = 10.85 V), and a power system was constructed in which this set battery was connected to a charge/discharge device comprising a constant-voltage charger with a rated charging voltage V_{C} of 10.6 V (V_{C} = 0.98 (n_{A}V_{A}+n_{B}V_{B}). This was the system of Practical Example 3-1.

### (Practical Examples 3-2, 3-3)

With respect to Practical Example 3-1, other than the fact that constant-voltage chargers with a rated charging voltage V_{C} of 11.4 V (Practical Example 3-2: V_{C} = 1.05 (n_{A}V_{A}+n_{B}V_{B})) or of 12.5 V (Practical Example 3-3: V_{C} = 1.15 (n_{A}V_{A}+n_{B}V_{B})) were used, power systems similar to those of Practical Example 3-1 were constructed.

### (Comparative Examples 3-1,3-2)

With respect to Practical Example 3-1, other than the fact that constant-voltage chargers with a rated charging voltage V_{C} of 10.3 V (Comparative Example 3-1: V_{C} = 0.95 (n_{A}V_{A}+n_{B}V_{B})) or of 13.0 V (Comparative Example 3-2: V_{C} = 1.2 (n_{A}V_{A}+n_{B}V_{B})) were used, power systems similar to those of Practical Example 3-1 were constructed.

The normal-temperature charging characteristics and high-temperature charging characteristics of the above power systems were evaluated, similarly to those of Practical Example 1. Results appear in Table 3.

**[Table 3]**

| | Comparative Example 3-1 | Practical Example 3-1 | Practical Example 3-2 | Practical Example 3-3 | Comparative Example 3-2 |
|---|---|---|---|---|---|
| Vc (V) | 10.3 | 10.6 | 11.4 | 12.5 | 13.0 |
| Normal-temperature charge/discharge capacity (mAh) | 0 | 2 | 43 | 1370 | 2614 |
| Number of fluctuations of ammeter needle | 20 | 0 | 0 | 0 | 0 |
| High-temperature charging/electrolyte fluid leakage | no | no | no | no | yes |

In Comparative Example 3-1, in which the relation between the rated voltage of the set battery (n_{A}V_{A}+n_{B}V_{B}) and the constant-voltage charger rated charging voltage V_{C} is V_{C} < 0.98 (n_{A}V_{A}+n_{B}V_{B}), the large-current discharge characteristic was at a low level. The reason for this may have been that the rated charging voltage V_{C} of the constant-voltage charger was excessively low, so that the set battery was not charged sufficiently, and capacity was not sufficient to withstand large-current discharge. When such a power system is used as the power system 3 for a vehicle as shown in Fig. 3, excess power generated by the constant-voltage charger 1 is not absorbed by the set battery 2, so that all the power generated is supplied to the onboard equipment 4, and there are concerns of malfunction of the onboard equipment 4.

In Comparative Example 3-1 the "number of fluctuations of the ammeter needle" is 20, as indicated in Table 3, and when the supply of current from the constant-voltage charger 1 stops, current could not be supplied from the set battery 2 to the onboard equipment 4. Hence Comparative Example 3-1, in which V_{C} < 0.98 n_{A}V_{A}, is not suitable as a power system for use as an automotive power source.

On the other hand, in Practical Example 3-1, in which the rated charging voltage V_{C} 0.98 n_{A}V_{A}, during normal-temperature charging characteristic tests the discharge capacity was 2 mAh. That is, the set battery 2 in Practical Example 3-1 was charged with an electrical quantity of 0.1 mAh or greater, so that when the above-described pulse-like drop in the output power of the constant-voltage charger 1 occurs, sufficient power can be supplied to the onboard equipment 4.

In this case, if the discharge capacity is 2 mAh, then when a pulse-like output power drop occurs, because an electrical capacity which is 20 times 0.1 mAh is charged, approximately 20 pulse discharges are possible. As a result, similarly to the case of Practical Example 1-1, the set battery 2 in Practical Example 3-1 enables sufficient power to be supplied to the onboard equipment 4 when the above-described pulse-like drop in output power of the constant-voltage charger 1 occurs, even in for example the most demanding racing applications.

In Practical Example 3-1, the "number of fluctuations of the ammeter needle" in repeated charge/discharge tests was zero. That is, it was confirmed that the set battery 2 in Practical Example 3-1 can stably supply power to a dummy load, equivalent to the onboard equipment 4, through discharge of the set battery 2 even when there are 20 pulse-like halts in the supply of current from the constant-voltage charger 1.

In Comparative Example 3-2, in which the above relation is V_{C} > 1.15 (n_{A}V_{A}+n_{B}V_{B})_{,} a safety valve provided to avoid cell deformation operated fully, electrolyte fluid leakage occurred, and high-temperature charging characteristics were at a low level. The reason for this may have been that the rated charging voltage V_{C} of the constant-voltage charger was excessively high, so that the set battery was charged to excess, a large quantity of oxygen gas was generated, and the internal pressure of the cells was increased.

In contrast with this Comparative Example, in the Practical Examples 3-1, 3-2, 3-3 of this invention the large-current discharge characteristics and high-temperature charging characteristics were both satisfactory.

In Practical Example 3, an example was described in which nickel hydrogen storage batteries were used as alkaline storage batteries, and lithium ion secondary batteries were used as nonaqueous electrolyte secondary batteries; but similar results were obtained even when nickel cadmium storage batteries employing negative electrodes with cadmium as active material were used as alkaline storage batteries, and lithium polymer secondary batteries, employing electrolyte fluid formed into a gel, were used as nonaqueous electrolyte secondary batteries.

Based on the above-described problems, a power system of this invention comprises a set battery and a constant-voltage charger which charges the set battery; the set battery comprises n_{A} cells A with an average discharge voltage V_{A} (or, n_{A} cells A with an average discharge voltage V_{A} and n_{B} cells B with an average discharge voltage V_{B}) connected in series, and the rated charging voltage V_{C} of the constant-voltage charger is in the range 0.98 n_{A}V_{A} ≤ V_{C} ≤ 1.15 n_{A}V_{A} (or, 0.98 (n_{A}V_{A}+n_{B}V_{B}) ≤ V_{C} ≤ 1.15 (n_{A}V_{A}+n_{B}V_{B})).

As a method of charging the set battery comprised by a power system described above, in a charging method of this invention, a set battery comprising n_{A} cells A with an average discharge voltage V_{A} (or, n_{A} cells A with an average discharge voltage V_{A} and n_{B} cells B with an average discharge voltage V_{B}) connected in series is charged at a rated charging voltage V_{C} which satisfies the relation 0.98 n_{A}V_{A} ≤ V_{C} ≤ 1.15 n_{A}V_{A} (or, 0.98 (n_{A}V_{A}+n_{B}V_{B}) ≤ V_{C} ≤ 1.15 (n_{A}V_{A}+n_{B}V_{B})).

By constructing a power system or by charging a set battery so as to satisfy the above relation, when using a constant voltage to charge secondary batteries the energy density per unit weight of which is higher than lead storage batteries, a power system and charging method can be provided in which concerns of deformation of the secondary batteries due to overcharging are reduced, and safety can be improved.

### Industrial Applicability

A power system of this invention can be implemented even when using a simple constant-voltage charger, so that there are great possibilities for utilization as the power source in automobiles and other equipment.

## Claims

1. A power system, comprising:
a set battery, in which a plurality of cells are connected in series; and
a constant-voltage charger, which applies a constant rated charging voltage V_{C} to charge said set battery,
and wherein the total voltage Vx which is the total of the average discharge voltages of said plurality of cells, and said rated charging voltage V_{C} are set so as to satisfy the relation 0.98Vx ≤ V_{C} ≤ 1.15Vx.

2. The power system according to Claim 1, wherein, in said set battery, n_{A} cells A with an average discharge voltage V_{A} are connected in series, and the number n_{A} of said cells A and said rated charging voltage V_{C} are set so as to satisfy the relation 0.98n_{A}V_{A} ≤ V_{C} ≤ 1.15n_{A}V_{A}.

3. The power system according to Claim 1 or Claim 2, wherein the nominal voltage of cells is used as said average discharge voltage.

4. The power system according to any one of Claims 1 through 3, wherein at least one among nickel hydrogen storage batteries and nickel cadmium storage batteries are used as said cells.

5. The power system according to any one of Claims 1 through 3, wherein nonaqueous electrolyte secondary batteries are used as said cells.

6. The power system according to Claim 5, wherein a lithium complex oxide comprising cobalt is used in an active material of positive electrodes of said nonaqueous electrolyte secondary batteries.

7. The power system according to Claim 1, wherein, in said set battery, said n_{A} cells A, and n_{B} cells B having an average discharge voltage V_{B} different from said average discharge voltage V_{A}, are connected in series, and the number n_{A} of said cells A, the number n_{B} of said cells B, and said rated charging voltage V_{C} are set so as to satisfy the relation 0.98(n_{A}V_{A}+n_{B}V_{B}) ≤ V_{C} ≤ 1.15(n_{A}V_{A}+n_{B}V_{B}).

8. The power system according to Claim 7, wherein at least one among nickel hydrogen storage batteries and nickel cadmium storage batteries are used as said cells A.

9. The power system according to Claim 7 or Claim 8, wherein nonaqueous electrolyte secondary batteries are used as said cells B.

10. The power system according to Claim 9, wherein in that a lithium complex oxide comprising cobalt is used in an active material of positive electrodes of said nonaqueous electrolyte secondary batteries.

11. A set battery charging method, comprising charging a set battery in which a plurality of cells are connected in series and which has a total voltage Vx that is the total of the average discharge voltages of said plurality of cells, at a constant rated charging voltage V_{C} which satisfies the relation 0.98Vx ≤ V_{C} ≤ 1.15Vx.

12. The set battery charging method according to Claim 11, wherein n_{A} cells A with an average discharge voltage V_{A} are connected in series in said set battery, and said set battery is charged at a constant rated charging voltage V_{C} which satisfies the relation 0.98n_{A}V_{A} ≤ V_{C} ≤ 1.15n_{A}V_{A}.

13. The set battery charging method according to Claim 11 or Claim 12, wherein at least one among nickel hydrogen storage batteries and nickel cadmium storage batteries are used as said cells.

14. The set battery charging method according to Claim 11 or Claim 12, wherein nonaqueous electrolyte secondary batteries are used as said cells.

15. The set battery charging method according to Claim 14, wherein a lithium complex oxide comprising cobalt is used in an active material of positive electrodes of said nonaqueous electrolyte secondary batteries.

16. The set battery charging method according to Claim 11, wherein , in said set battery, said n_{A} cells A, and n_{B} cells B having an average discharge voltage V_{B} different from said average discharge voltage V_{A}, are connected in series, and said set battery is charged at a constant rated charging voltage V_{C} which satisfies the relation 0.98(n_{A}V_{A}+n_{B}V_{B}) ≤ V_{C} ≤ 1.15(n_{A}V_{A}+n_{B}V_{B}).

17. The set battery charging method according to Claim 16, wherein at least one among nickel hydrogen storage batteries and nickel cadmium storage batteries are used as said cells A.

18. The set battery charging method according to Claim 16 or Claim 17, wherein nonaqueous electrolyte secondary batteries are used as said cells B.

19. The set battery charging method according to Claim 18, wherein a lithium complex oxide comprising cobalt is used in an active material of positive electrodes of said nonaqueous electrolyte secondary batteries.
